# EUROPEAN PATENT SPECIFICATION

(11) **EP 4 246 992 B1**
(45) Date of publication and mention of the grant of the patent: **02.07.2025**
(21) Application number: 23161168.2
(22) Date of filing: 10.03.2023
(51) Int. Cl.: H04N 23/661

(54) **IMAGE CAPTURING APPARATUS, METHOD OF CONTROLLING IMAGE CAPTURING APPARATUS, AND COMPUTER PROGRAM**
BILDERFASSUNGSVORRICHTUNG, VERFAHREN ZUR STEUERUNG DER BILDERFASSUNGSVORRICHTUNG UND COMPUTERPROGRAMM
APPAREIL DE CAPTURE D'IMAGE, PROCÉDÉ DE COMMANDE D'APPAREIL DE CAPTURE D'IMAGE ET PROGRAMME INFORMATIQUE

(30) Priority: 15.03.2022 JP 2022040734
(43) Date of publication of application: 20.09.2023
(73) Proprietor: CANON KABUSHIKI KAISHA, Tokyo 146-8501 (JP)
(72) Inventor: SATO, Noriaki, Tokyo, 146-8501 (JP)
(74) Representative: TBK

(56) References cited:
- US-A1- 2018 184 001
- US-A1- 2018 241 924

## Description

### BACKGROUND OF THE INVENTION

### Field of the Disclosure

The present disclosure relates to an image capturing apparatus, a method of controlling the image capturing apparatus, and a computer program.

### Description of the Related Art

In recent years, digital cameras that can develop and transfer captured images on the spot are known. However, depending on a communication environment in which images are transferred, a communication speed may be slow, and it may take time to finish the transfer of the images. For example, in a communication environment in which the communication speed is slow, when a plurality of captured images are sequentially transferred, images on standby for transfer accumulate. In cases where the images on standby for transfer have accumulated to a certain amount, new images cannot be transferred until the transfer of the accumulated images has finished. Japanese Patent Laid-Open No. 2018-137725 discloses a technique in which, to solve such a problem, a priority transfer target for which transfer is to be prioritized can be set, and the set priority transfer target is transferred ahead of an already present transfer target image.

Incidentally, in image capturing in a sports stadium or the like, for example, there are cases where image capturing is performed using a linked image capturing function for simultaneous release on a plurality of cameras. Images on standby for transfer may accumulate in accordance with the communication environment even in cases where images captured by a plurality of cameras using the linked image capturing function are sequentially transferred to a predetermined apparatus through a communication network. In the technique disclosed in Japanese Patent Laid-Open No. 2018-137725, the user has to find the images of the same shot in each of the cameras and set the images as priority transfer targets in order to prioritize transfer of each of the images captured by the plurality of cameras.
Document US 2018/241924 A1 discloses a communication apparatus that, in response to a first operation of pressing both a first operation member and a second operation member being performed during display of an image, designates the image being displayed as an image to be transferred, which is to be transferred to the external apparatus, and in response to a second operation that is different from the first operation and uses a plurality of operation members being performed, designates the image being displayed as an image to be priority transferred, which is to be transferred with greater priority than the image to be transferred. The plurality of operation members to be used in the second operation include at least one of the first operation member and the second operation member.
Document US 2018/184001 A1 discloses an apparatus for controlling image capturing including circuitry to control image capturing operation of each one of a first image capturing device and a second image capturing device, so as to cause the first image capturing device and the second image capturing device to cooperate with each other to perform linked image capturing, the first image capturing device capable of capturing an image with an angle of view wider than that of the second image capturing device. The circuitry controls one of the first image capturing device and the second image capturing device to start image capturing in response to starting of image capturing by other one of the first image capturing device and the second image capturing device.

### SUMMARY

The present disclosure has been made in view of the above techniques, and one objective thereof is to realize a technique in which it is possible to prioritize transfer of an image that was captured in linkage with an image set as a priority transfer target by another image capturing apparatus.

The present invention in its first aspect provides an image capturing apparatus as specified in claims 1 to 9.

The present invention in its second aspect provides a method of controlling an image capturing apparatus as specified in claim 10.

The present invention in its third aspect provides a computer program as specified in claim 11.

Further features of various embodiments of the present disclosure will become apparent from the following description of exemplary embodiments (with reference to the attached drawings).

### BRIEF DESCRIPTION OF THE DRAWINGS

FIG. 1A and FIG. 1B are views illustrating an external configuration example of a digital camera according to a first embodiment.
FIG. 2 is a block diagram illustrating an example of a functional configuration of a digital camera according to the first embodiment.
FIG. 3 is a view illustrating one example of a network configuration according to the first embodiment.
FIG. 4 is a view illustrating one example of a flowchart illustrating a connection process of linked image capturing according to the first embodiment.
FIG. 5 is a view illustrating one example of information of a digital camera relating to linked image capturing according to the first embodiment.
FIG. 6 is a flowchart illustrating an operation of capture event processing according to the first embodiment.
FIG. 7A is a flowchart illustrating an operation of transfer event processing according to the first embodiment.
FIG. 7B is a flowchart illustrating an operation of transfer processing according to the first embodiment.
FIG. 8 is a view illustrating one example of a transfer list according to the first embodiment.
FIG. 9A and FIG. 9B are flowcharts illustrating an operation of capture event processing according to a second embodiment.
FIG. 10A and FIG. 10B are flowcharts illustrating an operation of image transfer event processing according to the second embodiment.
FIG. 11 is a flowchart illustrating an operation of image transfer event processing according to a third embodiment.
FIG. 12 is a flowchart illustrating an operation of reception processing in a reception apparatus according to the third embodiment.

### DESCRIPTION OF THE EMBODIMENTS

Hereinafter, embodiments will be described in detail with reference to the attached drawings. Note, the following embodiments are not intended to limit the scope of every embodiment. Multiple features are described in the embodiments, but limitation is not made to an embodiment that requires all such features, and multiple such features may be combined as appropriate. Furthermore, in the attached drawings, the same reference numerals are given to the same or similar configurations, and redundant description thereof is omitted.

### (First Embodiment)

### <External Configuration of Digital Camera>

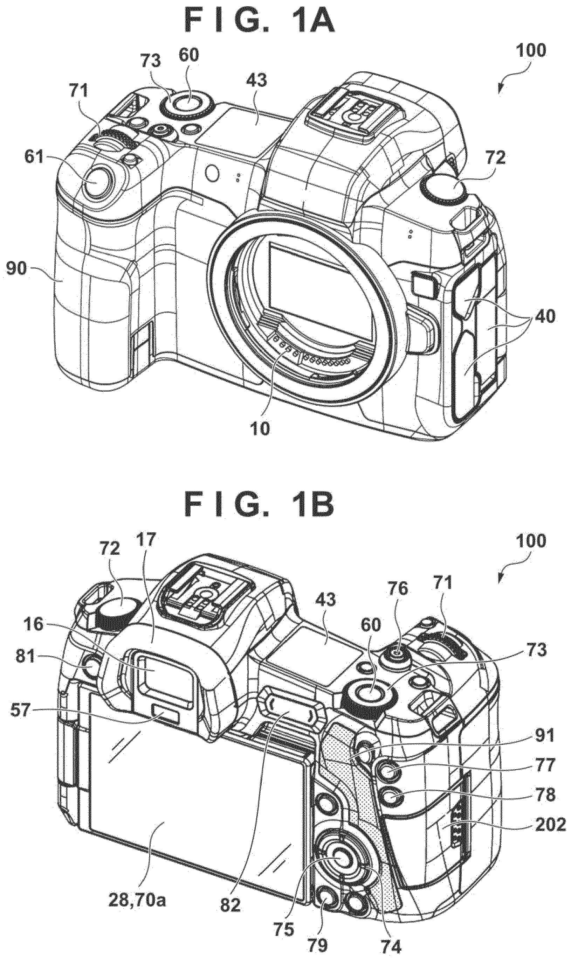

FIG. 1A and FIG. 1B illustrate external views of a digital camera as one example of an image capturing apparatus according to the present embodiment. FIG. 1A is a front perspective view of a digital camera 100, and FIG. 1B is a rear perspective view of the digital camera 100.

A display unit 28 is a display unit arranged on the rear surface of the digital camera 100, and displays images and various kinds of information. A touch panel 70a can detect a touch operation on a display surface (touch operation surface) of the display unit 28. An out-of-viewfinder display unit 43 is a display unit arranged on the upper surface of the digital camera 100, and displays various setting values of the digital camera 100, such as a shutter speed or an aperture. A shutter button 61 is an operation member for performing an image capturing instruction. A mode-switching switch 60 is an operation member for switching between various modes. A terminal cover 40 is a cover for protecting a connector (not shown) with a connection cable or the like for connecting the digital camera 100 to an external device.

A main electronic dial 71 is a rotational operation member, and can be used to change a setting value, such as the shutter speed or the aperture, by being rotated. A power switch 72 is an operation member that switches the power of the digital camera 100 ON and OFF. A sub-electronic dial 73 is a rotational operation member, and can be used to move a selection frame (cursor), scroll through images, or the like by being rotated. A four-directional key 74 is configured to be able to be pressed in each of upper, lower, left, and right portions, and can be used to perform processing in accordance with the pressed portion of the four-directional key 74. A SET button 75 is a press button, and is mainly used to determine a selection item and the like.

A moving image button 76 is used for an instruction to start or stop a moving image capture (recording). An AE lock button 77 is a press button, and an exposure state can be fixed by pressing the AE lock button 77 in an image capture standby state. An enlarge button 78 is an operation button for switching an enlargement mode on and off in a live view display (LV display) of an image capturing mode. A live view image (LV image) can be enlarged or reduced by turning on the enlargement mode and then operating the main electronic dial 71. In a playback mode, the enlarge button 78 functions as an operation button for enlarging a playback image and causing the enlargement factor to increase. A playback button 79 is an operation button for switching between the image capturing mode and the playback mode. By pressing the playback button 79 while in the image capturing mode, it is possible to transition into the playback mode and cause the latest image among the images recorded on a recording medium 200 (described later) to be displayed on the display unit 28. A menu button 81 is a press button used for performing an instruction operation for causing a menu screen to be displayed, and when the menu button 81 is pressed, a menu screen on which various settings can be made is displayed on the display unit 28. A user can intuitively perform various settings using the menu screen displayed on the display unit 28, the four-directional key 74, and the SET button 75.

A touch bar 82 (a multi-function bar: M-Fn bar) is a line-shaped touch operation member (line touch sensor) capable of receiving a touch operation. The touch bar 82 is arranged at a position where a touch operation is possible (a touchable position) with the thumb of the right hand in a state where a grip portion 90 is gripped by the right hand such that the shutter button 61 can be pressed with the index finger of the right hand (a state in which the grip portion is gripped by the pinky finger, the ring finger, and the middle finger of the right hand). That is, the touch bar 82 is arranged at a position where it can be operated in a state (image capturing orientation) in which the camera is held so that the user is able to view the viewfinder by bringing their eye close to an eyepiece portion 16 and press the shutter button 61 at any time. The touch bar 82 is a reception unit capable of receiving a tap operation (an operation of releasing without moving within a predetermined period of time by touching) on the touch bar 82, a slide operation to the left and right (an operation touching then moving the touch position while touching), and the like. The touch bar 82 is an operation member that differs from the touch panel 70a and does not have a display function.

A communication terminal 10 is a communication terminal for communicating with a lens unit 150 side to and from which the digital camera 100 can be attached and detached. The eyepiece portion 16 is an eyepiece portion of an eyepiece viewfinder 17 (a look-though type viewfinder), and the user can visually recognize a video image displayed on a built-in Electronic ViewFinder (EVF) 29 via the eyepiece portion 16. An eye proximity detection unit 57 is an eye proximity detection sensor that detects whether or not a user (photographer) has brought their eye close to the eyepiece portion 16. A lid 202 is a lid for a slot in which the recording medium 200 (described later) is stored. The grip portion 90 is a holding portion that is shaped to be easily gripped by the right hand when the user holds the digital camera 100. The shutter button 61 and the main electronic dial 71 are arranged at positions at which they can be operated by the index finger of the right hand in a state where the digital camera 100 is held by holding the grip portion 90 with the pinky finger, the ring finger, and the middle finger of the right hand. In addition, in the same state, the sub-electronic dial 73 and the touch bar 82 are arranged at positions that can be operated by the thumb of the right hand. A thumbrest portion 91 (a thumb standby position) is a grip member arranged at a position on the rear surface side of the digital camera 100 where the thumb of the right hand holding the grip portion 90 is easily placed in a state where no operation member is operated. The thumbrest portion 91 is configured by a rubber member or the like for enhancing the holding force (grip feel).

### <Example of Functional Configuration of Digital Camera>

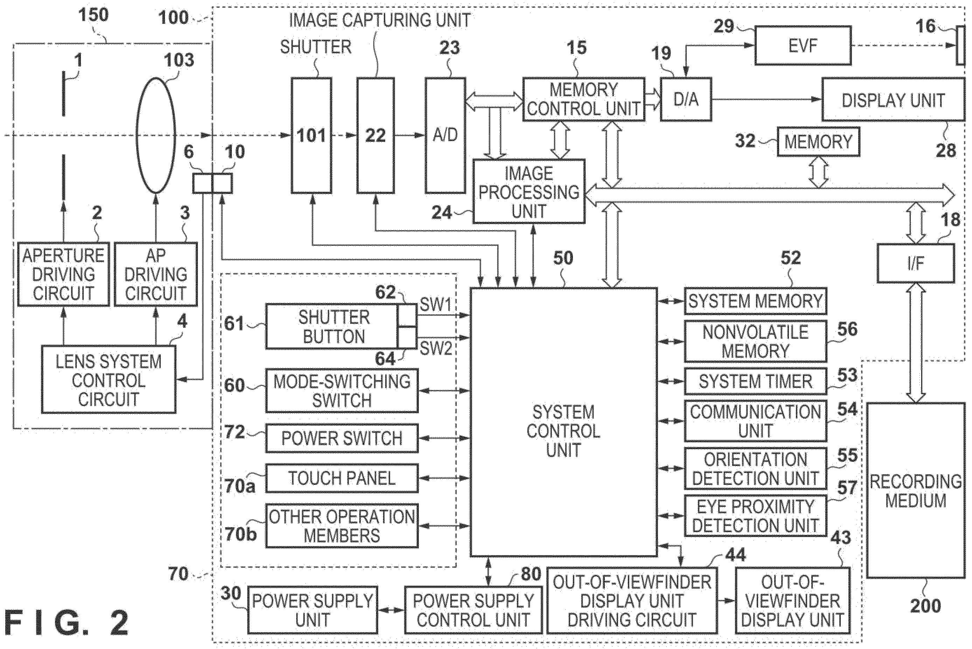

Next, a functional configuration example of the digital camera 100 will be described with reference to FIG. 2. The lens unit 150 is a lens unit on which an interchangeable image capturing lens is mounted. A lens 103 is normally configured using a plurality of lenses, but only one lens is shown in FIG. 2 for simplicity. A communication terminal 6 is a communication terminal for the lens unit 150 to communicate with the digital camera 100 side, and a communication terminal 10 is a communication terminal for the digital camera 100 to communicate with the lens unit 150 side. The lens unit 150 communicates with a system control unit 50 via the communication terminals 6 and 10. Also, the lens unit 150 controls an aperture 1 via an aperture driving circuit 2 by an internal lens system control circuit 4. In addition, the lens unit 150 aligns a focus by displacing the position of the lens 103 via an AF driving circuit 3 by the lens system control circuit 4. A shutter 101 is, for example, a focal plane shutter capable of freely controlling the exposure time of an image capturing unit 22 under the control of the system control unit 50.

The image capturing unit 22 is an image capturing element (image sensor) configured by a CCD, a CMOS device, or the like that converts an optical image into an electric signal. The image capturing unit 22 may include an image capturing plane phase sensor that outputs defocus amount information to the system control unit 50. An A/D converter 23 converts an analog signal outputted from the image capturing unit 22 into a digital signal.

The image processing unit 24 performs predetermined processing (pixel interpolation, resizing processing such as reduction, color-conversion processing, and the like) on data from the A/D converter 23 or data from the memory control unit 15. Further, the image processing unit 24 performs predetermined computational processing by using the captured image data, and the system control unit 50 performs exposure control or distance measurement control based on the computation result obtained by the image processing unit 24. Thereby, through-the-lens (TTL) method autofocus (AF) processing, automatic exposure (AE) processing, pre-flash (EF) processing, and the like are performed. The image processing unit 24 further performs predetermined computational processing using the captured image data, and performs AWB (auto white balance) processing of a TTL method based on the obtained computation result.

Data outputted from the A/D converter 23 is written to a memory 32 via the image processing unit 24 and the memory control unit 15. Alternatively, data outputted from the A/D converter 23 is written into the memory 32 through the memory control unit 15 without going through the image processing unit 24. The memory 32 stores image data that was obtained by the image capturing unit 22 and converted into digital data by the A/D converter 23, and stores image data for display on the display unit 28 or the EVF 29. The memory 32 has a storage capacity sufficient to store a predetermined number of still images or moving images and sound of a predetermined period of time.

Also, the memory 32 functions as a memory (video memory) for image display. A D/A converter 19 converts data for image display stored in the memory 32 into an analog signal, and then supplies the analog signal to the display unit 28 or the EVF 29. In this way, the data for image display written in the memory 32 is displayed by the display unit 28 or the EVF 29 via the D/A converter 19. Each of the display unit 28 and the EVF 29 is a display such as an LCD or an organic EL, and performs display in accordance with an analog signal from the D/A converter 19. A live view display (LV) can be performed by converting a digital signal, which is the result of an A/D conversion by the A/D converter 23 and which has been stored in the memory 32, into an analog signal in the D/A converter 19 and then sequentially transferring the digital signal to the display unit 28 or EVF 29 for display. Hereinafter, an image displayed in the live view display is referred to as a live view image (LV image).

The system control unit 50 is a control unit including at least one processor and/or at least one circuit, and controls the digital camera 100 overall. The system control unit 50 executes a program recorded in a nonvolatile memory 56 to realize each process of the present embodiments that are described later. The system control unit 50 also performs display control by controlling the memory 32, the D/A converter 19, the display unit 28, the EVF 29, and the like.

A system memory 52 is, for example, a RAM, and the system control unit 50 loads into the system memory 52 constants, variables, programs read from the nonvolatile memory 56, and the like for the operation of the system control unit 50.

The nonvolatile memory 56 is an electrically erasable and recordable memory such as an EEPROM, for example. In the nonvolatile memory 56, constants, programs, and the like for the operation of the system control unit 50 are recorded. The programs referred to here are programs for executing the various flowcharts described later in the present embodiments.

A system timer 53 is a time measurement unit that measures time used in various types of control or measures the time of an internal clock.

A communication unit 54 transmits and receives video signals and audio signals to and from an external device connected wirelessly or by a wired cable. The communication unit 54 can also be connected to a wireless Local Area Network (LAN) or the Internet. The communication unit 54 is also capable of communicating with an external device by Bluetooth^{®} or Bluetooth Low Energy. The communication unit 54 can transmit an image (including an LV image) captured by the image capturing unit 22 or an image recorded on the recording medium 200, and can receive image data and various other types of information from an external device.

An orientation detection unit 55 detects the orientation of the digital camera 100 with respect to the direction of gravity. Based on the orientation detected by the orientation detection unit 55, it is possible to determine whether the image captured by the image capturing unit 22 is an image captured when holding the digital camera 100 horizontally or an image captured when holding the digital camera vertically. The system control unit 50 can add direction information in accordance with the orientation detected by the orientation detection unit 55 to an image file of an image captured by the image capturing unit 22 and can rotate an image and then record the image. An acceleration sensor, a gyro sensor, or the like can be used as the orientation detection unit 55. The motion of the digital camera 100 (whether it is panning, tilting, lifting, stationary, or the like) can also be detected by using an acceleration sensor or a gyro sensor which are the orientation detection unit 55.

The eye proximity detection unit 57 is an eye proximity detection sensor that detects (approach detection) an approach (eye proximity) and separation (eye separation) of an eye (object) with respect to the eyepiece portion 16 of the eyepiece viewfinder 17 (hereinafter, simply referred to as a "viewfinder"). The system control unit 50 switches a display (displayed state) and a non-display (non-displayed state) of the display unit 28 and the EVF 29 in accordance with the state detected by the eye proximity detection unit 57. More specifically, in a case where the camera is at least in the image capture standby state and a switching setting of a display destination is automatically switched, display is turned on with the display destination as the display unit 28 and the EVF 29 is made to not display when the user's eye is not close. Also, when the user's eye is close, the display is turned on with the display destination as the EVF 29 and the display unit 28 is made to not display. For example, an infrared proximity sensor can be used as the eye proximity detection unit 57, and it is possible to detect the approach of any object to the eyepiece portion 16 of the viewfinder 17 into which the EVF 29 is built. In the case of an object approaching, the infrared rays projected from a light projecting unit (not shown) of the eye proximity detection unit 57 are reflected by the object and received by a light receiving unit (not shown) of the infrared proximity sensor. Depending on the amount of received infrared rays, it is also possible to determine what distance the object has approached the eyepiece portion 16 (eye proximity distance) to. As described above, the eye proximity detection unit 57 performs eye proximity detection for detecting a proximity distance of an object to the eyepiece portion 16. In a case where an object is detected to have approached the eyepiece portion 16 to within a predetermined distance from a state in which the user's eye is not close (non-approached state), it is assumed that eye proximity has been detected. In a case where the object whose proximity has been detected moves away more than a predetermined distance from a state in which the user's eye is close (approached state), it is assumed that eye separation has been detected. A threshold value for detecting eye proximity and a threshold value for detecting eye separation may be different, for example, by providing hysteresis or the like. Also, after eye proximity has been detected, it is assumed that a state in which the user's eye is close has been entered until eye separation is detected. After eye separation has been detected, it is assumed that a state in which the user's eye is not close has been entered until eye proximity is detected. Note that the infrared proximity sensor is only one example, and configuration may be taken such that other sensors are employed as the eye proximity detection unit 57 as long as they can detect a state that can be regarded as eye proximity.

Various setting values of the camera, such as the shutter speed or the aperture, are displayed on the out-of-viewfinder display unit 43 via an out-of-viewfinder display unit driving circuit 44.

A power supply control unit 80 includes a battery detection circuit, a DC-DC converter, a switching circuit for switching a block to be powered, and the like, and the power supply control unit 80 detects whether or not a battery is attached, a type of a battery, a remaining battery amount, and the like. In addition, the power supply control unit 80 controls the DC-DC converter based on the detection result and an instruction from the system control unit 50, and supplies a required voltage to each unit, including the recording medium 200, for a required period. A power supply unit 30 includes a primary battery, such as an alkaline battery or a lithium battery; a secondary battery, such as an NiCd battery, an NiMH battery, or an Li battery; an AC adapter; and the like.

A recording medium I/F 18 is an interface with the recording medium 200 such as a memory card or a hard disk. The recording medium 200 is a recording medium such as a memory card for recording a captured image, and is configured using a semiconductor memory, a magnetic disk, or the like.

An operation unit 70 is an input unit that receives an operation (user instruction) from the user, and is used for inputting various operation instructions to the system control unit 50. As illustrated in FIG. 2, the operation unit 70 includes the shutter button 61, the mode-switching switch 60, the power switch 72, the touch panel 70a, other operation members 70b, and the like. In the other operation members 70b, the main electronic dial 71, the sub-electronic dial 73, the four-directional key 74, the SET button 75, the moving image button 76, the AE lock button 77, the enlarge button 78, a playback button 79, the menu button 81, the touch bar 82, and the like are included.

The shutter button 61 includes a first shutter switch 62 and a second shutter switch 64. The first shutter switch 62 is turned ON by a so-called half-press (image capture preparation instruction) while the shutter button 61 is being operated, and generates a first shutter switch signal SW1. The system control unit 50 starts an image capture preparation operation such as autofocus (AF) processing, automatic exposure (AE) processing, auto white balance (AWB) processing, and pre-flash (EF) processing by the first shutter switch signal SW1.

The second shutter switch 64 is turned ON when the shutter button 61 is completely operated, a so-called full-press (an image capturing instruction), and generates a second shutter switch signal SW2. Upon the second shutter switch signal SW2, the system control unit 50 starts operation of a series of image capture processes from the signal being read from the image capturing unit 22 to the captured image being written as an image file to the recording medium 200.

The mode-switching switch 60 switches the operation mode of the system control unit 50 to any one of a still image capturing mode, a moving image capturing mode, a playback mode, and the like. An automatic image capturing mode, an automatic scene discrimination mode, a manual mode, an aperture priority mode (Av mode), a shutter speed priority mode (Tv mode), and a program AE mode (P mode) are present as modes included in the still image capturing mode. In addition, there are various scene modes, custom modes, and the like, which are image capturing settings for additional image capturing scenes. The mode-switching switch 60 allows the user to switch directly to any one of these modes. Alternatively, configuration may be taken such that a mode is selectively switched to any one of the plurality of displayed modes by using another operation member after temporarily switching to an image capturing mode list screen by the mode-switching switch 60. Similarly, the moving image capturing mode may include a plurality of modes.

The touch panel 70a is a touch sensor that detects various types of touch operations on the display surface of the display unit 28 (an operation surface of the touch panel 70a). The touch panel 70a and the display unit 28 can be integrally configured. For example, the touch panel 70a is configured so that light transmittance does not interfere with the display of the display unit 28, and the touch panel 70a is attached to the upper layer of the display surface of the display unit 28. Also, input coordinates on the touch panel 70a are associated with display coordinates on the display surface of the display unit 28. Accordingly, a graphical user interface (GUI) that enables the user to directly operate the screen displayed on the display unit 28 can be provided.

### <Network Configuration Example>

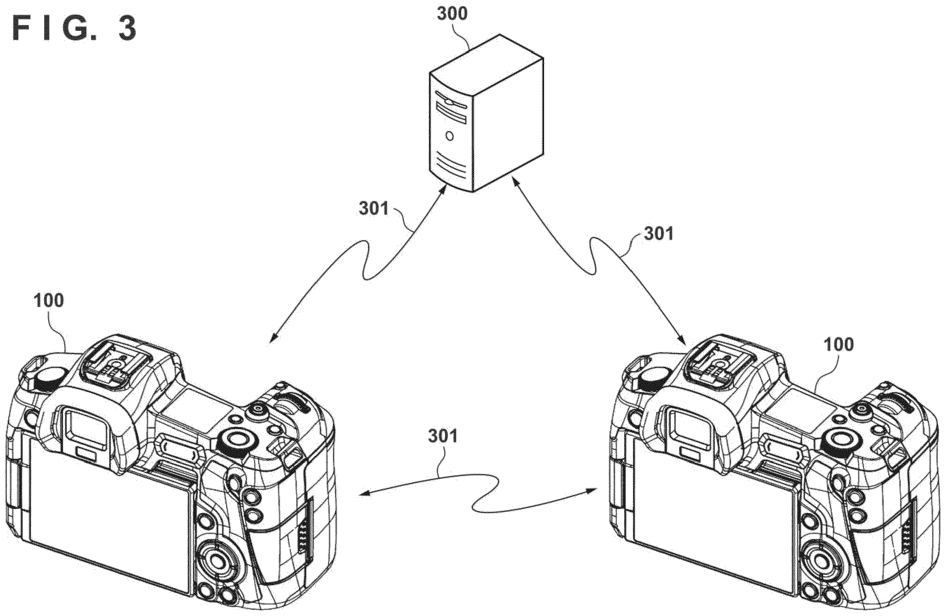

Next, a network configuration example according to the present embodiment will be described with reference to FIG. 3. In FIG. 3, a reception apparatus 300 is one example of a communication apparatus, such as a server, that accumulates received image data and the like. For example, configuration may be taken such that the reception apparatus 300 includes at least a communication unit capable of transmitting and receiving data via the Internet, a wired LAN, or a wireless LAN; a recording medium including a non-volatile semiconductor memory, a hard disk, or the like; a processor; and a memory. In a case where the plurality of digital cameras 100 communicate via a communication path 301 to perform linked image capturing (described later), each of the digital cameras 100 transmit captured images to the reception apparatus 300 via the communication path 301. The reception apparatus 300 receives the images transferred from each of the digital cameras 100 by the communication unit, and the reception apparatus 300 stores the received images in the recording medium.

The communication path 301 may be any communication path configured wirelessly or by a wired cable, and the plurality of digital cameras 100 and the reception apparatus 300 can transmit and receive data. Note, a configuration in which an operation performed by an arbitrary digital camera 100 is notified to another digital camera 100 is shown as an example in the description of the present embodiment, and it is assumed that all the digital cameras 100 perform the same processing. Configuration may be taken such that a portion of the processing can be omitted as long as the operation performed by the specific digital camera 100 is instructed to another digital camera 100.

### <Operation of Connection Processing for Linked Image Capturing>

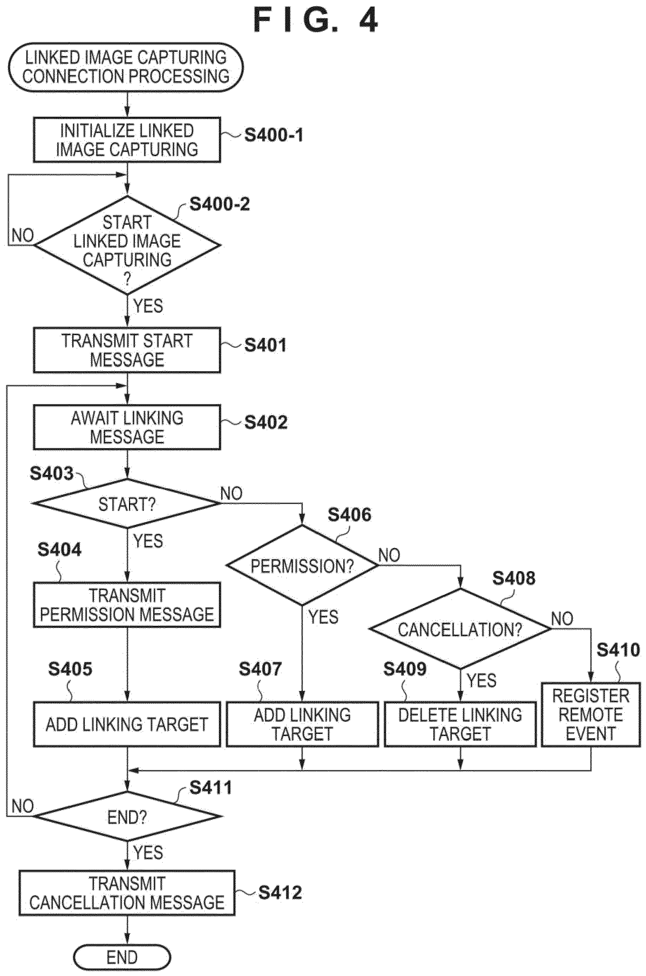

In the present embodiment, the digital camera 100 is communicatively connected to other digital cameras and can execute linked image capturing. Hereinafter, the operation of the connection processing for linked image capturing according to the present embodiment is described with reference to FIG. 4. A digital camera that executes the present processing is described as reference numeral 100a and another digital camera is described as reference numeral 100b in order to distinguish between a digital camera that executes the present processing and another digital camera. Note that configuration may be taken such that the other digital camera 100b is a plurality of digital cameras that are communicatively connected. Also, the processing of FIG. 4 is executed not only in the digital camera 100a but also in the other digital cameras. Each process in the flowchart of FIG. 4 is realized in the digital camera 100a by the system control unit 50 loading a program stored in the nonvolatile memory 56 into the system memory 52 and then executing the program.

In step S400-1, the system control unit 50 initializes information of the digital cameras, which will be deemed as targets of linked image capturing, stored in the system memory 52. In step S400-2, the system control unit 50 determines whether or not an instruction for starting linked image capturing has been issued by a user by the operation unit 70 being operated. In a case where an instruction to start linked image capturing has been issued, the processing from step S401 onward is executed. In step S401, the system control unit 50 transmits a linked image capturing start message, indicating that the digital camera 100a will start linked image capturing, to the other digital camera 100b via the communication unit 54. The system control unit 50 transmits a start message for starting linked image capturing. The start message includes identification information (a nickname or an IP address) of the digital camera 100a that is the transmission source of the start message, a release count indicating the number of images captured before the start of the linked image capturing, and a present time.

In step S402, the system control unit 50 waits for the reception of a message for linked image capturing transmitted from the other digital camera 100b. When the system control unit 50 receives the message for linked image capturing, the processing advances to step S403. In step S403, the system control unit 50 determines whether the message received in step S402 is a message for starting the linked image capturing. In a case where the received message is a start message (Yes), the system control unit 50 advances the processing to step S404, and otherwise advances the processing to step S406 (No). The digital camera 100a ends up receiving the start message by the processing of step S401 having been performed in the other digital camera.

In step S404, the system control unit 50 responds to the start message by transmitting a permission message indicating that the linked image capturing is permitted to the other digital camera 100b, which is the transmission source of the start message received in step S402. Identification information (a nickname or an IP address), for example, of the digital camera 100a, which is the transmission source of the permission message, is included in the permission message for permitting the linked image capturing, and then the message is transmitted. In addition, the permission message includes a release count indicating the number of images captured by the digital camera 100a before the start of the linked image capturing, a present time, and an index indicating an order in which cameras joined the linked image capturing. It also includes an index to be added to the digital camera 100b, which is the transmission source of the start message.

In step S405, the system control unit 50 stores a portion of the message for starting the linked image capturing received in step S402 as information of the digital camera 100b, with which the digital camera 100a is to perform the linked image capturing, in the system memory 52 as linked image capturing information of the digital camera 100b. Note, in a case where the data of the digital camera 100a has not been recorded as linked image capturing information 510, the data of the digital camera 100a is recorded.

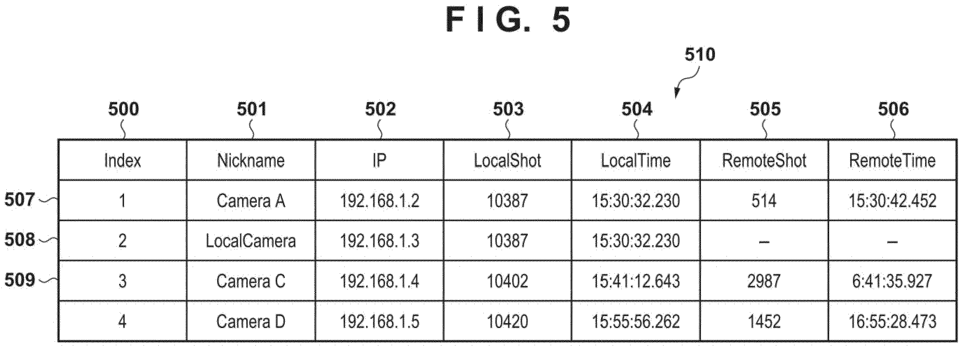

FIG. 5 illustrates one example of the linked image capturing information 510, which is stored in the system memory 52, of digital cameras which are to perform the linked image capturing. In FIG. 5, each row indicates a respective digital camera that is to perform linked image capturing, and each column indicates information of the digital camera. Reference numeral 500 denotes an index indicating an order in which cameras joined the linked image capturing. Reference numeral 501 denotes a nickname of a digital camera which is a transmission source of the message for starting the linked image capturing (received in step S402). Reference numeral 502 denotes an IP address of a digital camera which is a transmission source of the received message for starting the linked image capturing. Reference numeral 503 denotes a release count indicating the number of images captured by a digital camera at a time when the linked image capturing start message was received. The system control unit 50 can calculate the number of images captured in linkage with each camera based on the difference between the release count 503 and a latest release count. For example, if the latest release count is 10421, it can be understood that the camera having the index 500 of "1" has captured 34 images by linked image capturing. Also, it can be understood that the camera having the index 500 of "3" has captured 19 images by linked image capturing and the camera having the index 500 of "4" has captured 1 image by linked image capturing.

Reference numeral 504 denotes a time point when a digital camera received the message for starting the linked image capturing (in step S402). Reference numerals 505 and 506 denote information included in the message for starting linked image capturing (received in step S402). The reference numeral 505 denotes a release count indicating the number of images captured before the digital camera, which is the transmission source, started the linked image capturing. The reference numeral 506 denotes a time at which the digital camera, which is a transmission source, started the linked image capturing.

Reference numeral 507 denotes data indicating a digital camera that initially started the linked image capturing. Information included in the permission message for the linked image capturing received in step S407 is held in the data 507. This information includes the index 500, the nickname 501, the IP address 502, the release count 505, the time 506, and the release count 503 and the time 504 when a message is received.

Reference numeral 508 denotes data indicating the digital camera 100 holding the information illustrated in FIG. 5. "2" of the index 500, the nickname 501, the IP address 502, the release count 503, and the time 504 received from the digital camera 100 that initially started the linked image capturing are held in data 508.

Reference numeral 509 denotes data indicating the digital camera 100 that started linked image capturing after the digital camera 100 holding the information shown in FIG. 5. The index 500 added in step S404 is held in the data 509. The nickname 501, the IP address 502, the release count 505, the time 506, and the release count 503 and the time 504 when the message was received, which are included in the message for starting the linked image capturing received in step S402, are held in the data 509.

In step S406, the system control unit 50 determines whether the message received in step S402 is a message for permitting the linked image capturing. In a case where the received message is determined to be a permission message (Yes), the system control unit 50 advances the processing to step S407, and otherwise the system control unit 50 advances the processing to step S408 (No). In step S407, the system control unit 50 records to the system memory 52 the digital camera 100b, which is the transmission source of the permission message, as a target of linked image capturing and as information of a digital camera with which linked image capturing is to be performed (507). Also, the data (508) of the digital camera 100a for which permission for the linked image capturing was acquired is stored in the system memory 52 as the linked image capturing information 510. Note, in a case where data of the digital camera 100a has already been recorded as the linked image capturing information 510, the data of the digital camera 100a is not recorded.

In step S408, the system control unit 50 determines whether the message received in step S402 is a message for canceling the linked image capturing. In a case where the received message is determined to be a cancellation message (Yes), the system control unit 50 advances the processing to step S409, and otherwise advances the processing to step S410 (No).

In step S409, the system control unit 50 deletes the data of the digital camera 100b, which is the transmission source of the message for cancellation of the linked image capturing, from the linked image capturing information 510 in the system memory 52. In step S410, the system control unit 50 stores the message in the system memory 52 as a remote control event such as an instruction to execute linked image capturing or an instruction for priority transfer of an image.

In step S411, the system control unit 50 determines whether or not the linked image capturing has ended. In a case where it is determined that the linked image capturing has ended (e.g., by a user instruction or the like) (Yes), the system control unit 50 advances the processing to step S412, and if this is not the case (No), the system control unit 50 returns the processing to step S402. In step S412, the system control unit 50 transmits a cancellation message for canceling the linked image capturing to the other digital camera 100b, initializes the linked image capturing information, and then ends the connection for the linked image capturing.

### <Operation of Capture Event Processing for Linked Image Capturing>

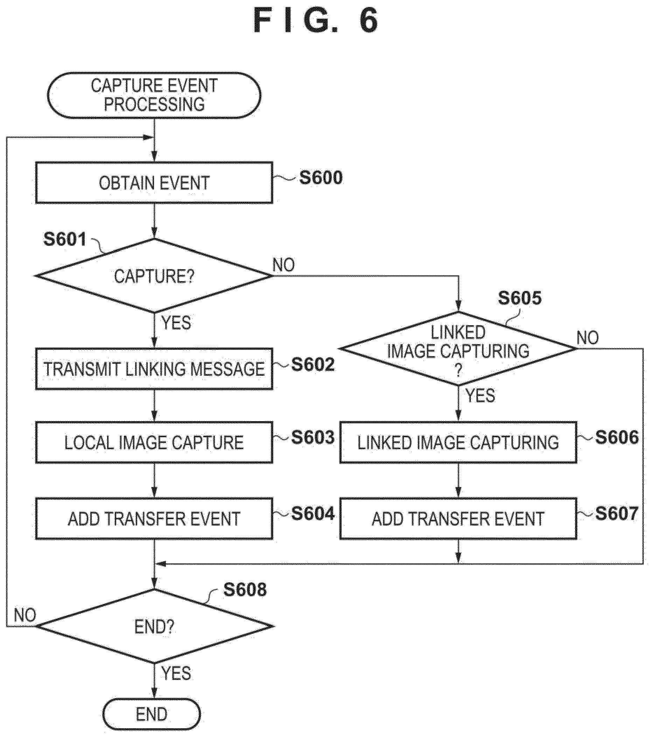

Hereinafter, an operation of capture event processing for linked image capturing according to the present embodiment is described with reference to FIG. 6. Note that each process in the flowchart illustrated in FIG. 6 is realized by the system control unit 50 loading a program stored in the nonvolatile memory 56 into the system memory 52 and then executing the program. Note that events described below include, for example, an event based on a user instruction for an operation, an event based on a reception of a linking message from another digital camera 100, and the like. Note, processing from step S601 onward ends up being immediately executed in accordance with the user instruction or the reception of the message since the system control unit 50 constantly monitors events.

Also, regarding the description of FIG. 6, a digital camera that executes the present processing is described using reference numeral 100a, and another digital camera is described using reference numeral 100b in order to distinguish between a digital camera that executes the present processing and another digital camera. Note that the flowchart of FIG. 6 is executed not only in the digital camera 100a but also in other digital cameras.

In step S600, the system control unit 50 obtains an event stored in the system memory 52. In step S601, the system control unit 50 determines whether the event obtained in step S600 is an event of an operation of an image capturing instruction for capturing an image, which is added when a press of a release switch (SW2, which is the reference numeral 64 in FIG. 2) is detected or the like. In a case where it is determined that the event is an event of an operation for an image capturing instruction for capturing an image (Yes), the system control unit 50 advances the processing to step S602, and otherwise the system control unit 50 advances the processing to step S605 (No).

In step S602, the system control unit 50 transmits an instruction to execute linked image capturing as a message from the digital camera 100a to the other digital camera 100b. This message is sent to the communication path 301 via the communication unit 54 of the digital camera 100a. The system control unit 50 may include the following information as a message for instructing execution of the linked image capturing. For example, the message may include a nickname or an IP address of the digital camera 100a, which is the transmission source of the message, a current release count, a current time, a UUID that can uniquely identify an object, a filename, a serial number that can uniquely identify the message, and the like.

In step S603, the system control unit 50 captures and stores an image. The system control unit 50 stores a portion of the message instructing execution of linked image capturing, differences between the information illustrated in FIG. 5, or the like as supplementary information of the image. In step S604, the system control unit 50 adds a transfer instruction for the image captured in step S603 to the digital camera 100a as a transfer event.

In step S605, the system control unit 50 determines whether the event obtained in step S600 is an event indicating that the instruction for executing the linked image capturing was received from the other digital camera 100b as a message. In a case where the event is an event indicating that an instruction for executing the linked image capturing has been received as a message (Yes), the system control unit 50 advances the processing to step S606; otherwise, the system control unit 50 advances the processing to step S608.

In step S606, the system control unit 50 captures and stores an image. The system control unit 50 stores a current release count, a current time, a portion of an instruction message for executing the linked image capturing, differences from the information illustrated in FIG. 5, a UUID, a filename, or the like as supplementary information of the image. In step S607, the system control unit 50 adds the transfer instruction for the image captured in step S606 to the digital camera 100a as a transfer event. As described above, the instruction to transfer the captured image is added as a transfer event to the digital camera 100a in a case where the image capturing instruction is from the user of the digital camera 100a or when the linked image capturing instruction is from the other digital camera 100b. Note, the transfer instruction (transfer event) is an instruction to transmit an image targeted for transfer to the reception apparatus 300. The transfer instruction (transfer event) includes information (such as a file path) for specifying the image targeted for transfer. Configuration may be taken such that not only information for specifying an image but also information to be later recorded in a transfer list is included.

In step S608, the system control unit 50 determines whether the event obtained in step S600 is an event indicating the end of the processing. In a case where it is determined that the event is an event indicating the end of the processing (Yes), the system control unit 50 ends the image capturing processing, and otherwise returns the processing to step S600 (No). In a case where it is not an event indicating the end of the processing in step S608 (No), the processing returns to step S600.

### <Operation of Transfer Event Processing of an Image>

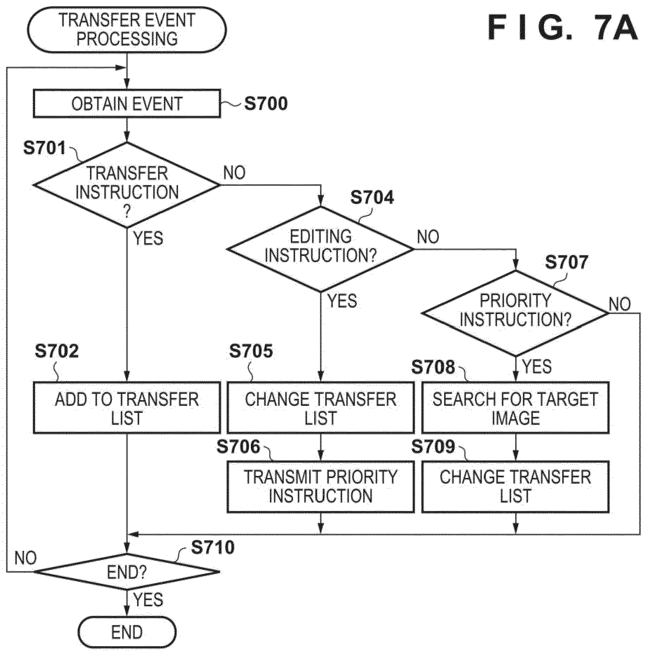

Hereinafter, operation of transfer event processing of an image according to the present embodiment is described with reference to FIG. 7A. Note that each process in this flowchart is realized by the system control unit 50 loading a program stored in the nonvolatile memory 56 into the system memory 52 and then executing the program. Note, processing from step S701 onward ends up being immediately executed in accordance with a user instruction or a reception of a message since the system control unit 50 constantly monitors events. Note that the processing of FIG. 7A is executed by a plurality of digital cameras that are communicatively connected to each other.

In step S700, the system control unit 50 obtains a transfer event stored in the system memory 52. In step S701, the system control unit 50 determines whether the event obtained in step S700 is a transfer event in response to which an image will be added to a transfer list.

In step S701, the system control unit 50 advances the processing to step S702 in a case where the obtained event is a transfer event in response to which an image will be added to the transfer list (Yes), and if this is not the case, the system control unit 50 advances the processing to step S704 (No). The transfer event in response to which the image is added to the transfer list is the transfer event that is added in step S604 or step S607. That is, the processing of step S702 ends up being executed in accordance with the capturing (S603, S606) of the image being executed.

**In** step S702, the system control unit 50 adds the image targeted for transfer, for which an instruction is given in the transfer event, to the transfer list. When the image for which the instruction is given is added to the transfer list, the image is transmitted to the reception apparatus 300 in the order described in the transfer list (that is, in a predetermined order). In the present embodiment, the transfer order of images is the capturing order of the images since the transfer events for the captured images are added at the time of image capture and the captured images are then added to the transfer list.

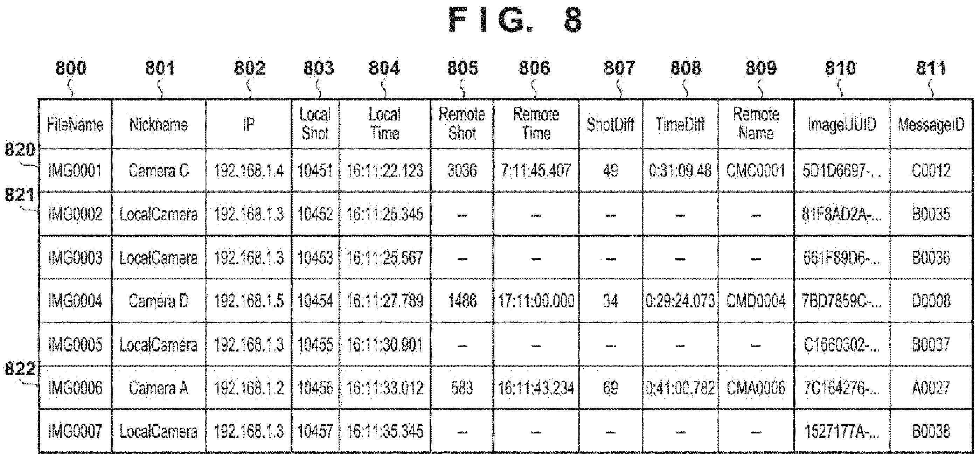

An example of a transfer list stored in the system memory 52 is described with reference to FIG. 8. Information of an image targeted for transfer is registered in the transfer list. Information of reference numerals 800 to 811 is registered in the transfer list for the image targeted for transfer.

Reference numeral 800 denotes a filename when the system control unit 50 stores data in the recording medium 200 or the like. A nickname 801 is a nickname of the digital camera for which the image capturing instruction has been performed. FIG. 8 shows a transfer list in a digital camera with a nickname "LocalCamera". In a case where the reference numeral 801 is "LocalCamera", it indicates that the image is an image obtained by a local image capture upon an image capturing instruction being performed on the digital camera. When reference numeral 801 is not "LocalCamera", it indicates that the image is a link captured image, and the nickname of a digital camera that is the transmission source of an instruction to execute linked image capturing is registered. Reference numeral 802 denotes an IP address, and the IP address of the digital camera is recorded in the case of a locally captured image, and an IP address of a digital camera that is the transmission source of an instruction to execute linked image capturing is recorded in the case of a link captured image. Reference numeral 803 denotes a release count of the digital camera when the image is captured. Reference numeral 804 denotes an image capturing time when the image is captured by the digital camera. Reference numeral 805 denotes information recorded in the case of linked image capturing, and is a release count in local image capturing by the digital camera, which is a transmission source of an instruction to execute linked image capturing, that executed image capturing in linkage with an image targeted for transfer. Reference numeral 806 denotes information recorded in the case of linked image capturing, and is an image capturing time in local image capturing by a digital camera, which is a transmission source of an instruction to execute linked image capturing, that executed image capturing in linkage with an image targeted for transfer.

Reference numeral 807 denotes a difference between the release count 805 indicating the number of images captured before the digital camera, which is the transmission source of an instruction to execute linked image capturing, started linked image capturing, and a release count when linked image capturing was instructed. Reference numeral 808 denotes a difference between the time 806 at which the digital camera, which is the transmission source of an instruction to execute linked image capturing, started linked image capturing and a time when the linked image capturing was instructed. Reference numeral 809 denotes a filename added to an image captured by a digital camera, which is the transmission source of an instruction to execute linked image capturing. Reference numeral 810 denotes a UUID which can uniquely identify an object added to an image captured by the digital camera that is the transmission source of an instruction to execute linked image capturing. Reference numeral 811 denotes a serial number added to a message by the digital camera that is the transmission source of an instruction to execute linked image capturing.

Reference numeral 820 is an image obtained by linked image capturing (in step S606) by reception of a message of an instruction to execute linked image capturing from another digital camera (CameraC). For example, the release count 805, the time 806, the release count difference 807, the time difference 808, the filename 809, the UUID 810, and the message serial number 811 are recorded in the information of that image. Reference numeral 821 is an image that is captured locally in accordance with an image capturing instruction from the user to the digital camera in step S603 by an event of an operation for image capturing instruction. For example, the release count 805, the time 806, the release count difference 807, the time difference 808, and the filename 809 are recorded in the information of this image. Reference numeral 822 is an image obtained in step S606 by linked image capturing by reception of a message for instructing execution of linked image capturing from another digital camera (CameraA) similarly to the image 820.

In the example of the transfer list shown in FIG. 8, information of the reference numerals 800 to 811 is held in the transfer list so as to be obtainable without referring to a captured image. However, configuration may be taken such that information of the reference numerals 800 to 811 is appended to an image, and only information for specifying the image is held in the transfer list.

FIG. 7A is referred to again. In step S704, the system control unit 50 determines whether the transfer event obtained in step S700 is a transfer event indicating an instruction to edit the transfer list. The transfer event indicating an instruction to edit the transfer list is a transfer event used when an image is selected from the transfer list and an instruction that the image be moved to the head of the transfer list is given, or when an image not in the transfer list is selected and then an instruction is given to add the image to the head of the transfer list. The instruction to edit the transfer list is, for example, a user instruction in which the user designates a specific image for which to prioritize transfer on a screen that the system control unit 50 has displayed on the display unit 28. The information of the transfer event indicating the instruction to edit the transfer list includes information such as a filename for specifying an image targeted for prioritized transfer. In a case where the event obtained in step S700 is determined to be a transfer event indicating an instruction to edit the transfer list (Yes), the system control unit 50 advances the processing to step S705, and otherwise the system control unit 50 advances the processing to step S707 (No). Note that the instruction to edit the transfer list ends up being performed in parallel to the execution of a transfer (transmission) of an image to the reception apparatus 300 because there are already items in the transfer list. Therefore, the instruction to edit the transfer list by the user and the processing of step S704 to step S709 are executed while an image is being transferred (being transmitted) to the reception apparatus 300. In addition, the processing of step S701 and step S702 is also executed while an image is being transferred (being transmitted) to the reception apparatus 300 in a case where transfer information has been registered in the transfer list.

In step S705, the system control unit 50 registers, at the head of the transfer list, an image for which prioritized transfer is designated by an editing instruction. In a case where an image has already been registered in the transfer list, the data of the image is moved to the head of the transfer list, and in a case where the image is not in the transfer list, the information of the image is registered by being added to the head of the transfer list. For example, in a case where an instruction is made to make the image 821 of FIG. 8 a priority transfer target, the system control unit 50 moves the data of the image 821 to before the data of the image 820 in the transfer list so that transmission of the image 821 to the reception apparatus 300 is prioritized.

In the present embodiment, in the case of a transfer event indicating an instruction to edit a transfer list, the digital camera 100a transmits a priority transfer instruction (also simply referred to as a priority instruction). Specifically, the digital camera 100a performs control so that, for an image which has been captured in linkage with a priority transfer target image for which an instruction for prioritized transfer has been made by an editing instruction, transfer is also prioritized in another digital camera. Therefore, in step S706, the system control unit 50 transmits, by an editing instruction, a priority transfer instruction as a message (also referred to as an interrupt message) to another digital camera that has performed image capturing in linkage with an image designated as a priority transfer target. In a case of performing image capturing in linkage with a plurality of digital cameras, a message indicating a priority transfer instruction is transmitted to the plurality of cameras. The other digital cameras that have performed image capturing in linkage with the priority transfer target image can be determined from the information of the priority transfer target image and the linked image capturing information 510 recorded in the system memory 52. Configuration may be taken such that the message of the priority transfer instruction is transmitted to digital cameras registered in the linked image capturing information 510 without determining the digital camera that performed the image capturing in linkage with the priority transfer target image. The message of the priority transfer instruction is sent to the communication path 301 via the communication unit 54. The system control unit 50 includes the following information recorded in the transfer list as linked image specification information in order to specify an image that is captured in linkage with an image designated as a priority transfer target, in the message for making a priority transfer target instruction. The nickname 801 of the camera, the IP address 802, the release count 803 at the time of image capturing, the time 804 at the time of image capturing, and the release count 805 of a digital camera, which is a transmission source of linked image capturing, are included in the transfer list. Configuration may be taken such that the linked image specification information further includes the time 806, the release count difference 807, the time difference 808, and the filename 809 of the digital camera that is a transmission source of linked image capturing, and the UUID 810, the message serial number 811, the IP address 802 of the digital camera indicating the destination of the message instructing the priority transfer target, and the like.

In step S707, the system control unit 50 determines whether the event obtained in step S700 is an event indicating that a priority transfer instruction was received. Note that a message of the priority transfer instruction ends up being received by the present digital camera as a result of the processing of step S706 being executed by the other digital camera. In a case where the event is an event indicating that a priority transfer instruction has been received as a message (Yes), the system control unit 50 advances the processing to step S708, and otherwise the system control unit 50 advances the processing to step S710 (No).

In step S708, the system control unit 50 searches for an image that is to be the target of priority transfer using the linked image specification information included in the priority transfer instruction message. The system control unit 50 compares the linked image specification information included in the priority transfer instruction message with the information in the transfer list, and searches for an image whose information matches. In a case where an image whose information matches is not found in the transfer list, the system control unit 50 compares the information of the images stored in the recording medium 200 or the like with the information included in the priority transfer instruction message, and searches for an image whose information matches. For example, an image for which the nickname 801 and the release count 805 match across the linked image specification information and the transfer list can be determined as an image to be the target of priority transfer. In a case where the release count 805 for local image capturing is not recorded in the linked image specification information or the transfer list, the priority transfer target determination may be made using the local release count 803 instead of the release count 805. The determination method is not limited to this, and configuration may be taken such that another determination method is used to specify an image that has been captured in linkage with an image for which a priority transfer is instructed by another digital camera, in the linked image specification information and the transfer list.

In step S709, the system control unit 50 moves the transfer information (reference numerals 800 to 811) of the image detected in the transfer list in step S708 to the head of the transfer list. In a case where a link captured image cannot be found in the transfer list in step S708, the image that could not be detected in the transfer list is added to the head of the transfer list. In the example of FIG. 8, in a case where a priority transfer target has been instructed for the image 822, the system control unit 50 moves the image 822 to before the image 820.

In step S710, the system control unit 50 determines whether the event obtained in step S700 is an event indicating the end of the processing. In a case where it is determined that the obtained event is an event indicating the end of the processing (Yes), the system control unit 50 ends the image transfer processing, and otherwise the system control unit 50 returns the processing to step S700 (No).

In this way, a transfer list is generated and changed by transfer event processing according to the processing of FIG. 7A.

### <Image Transfer Processing>

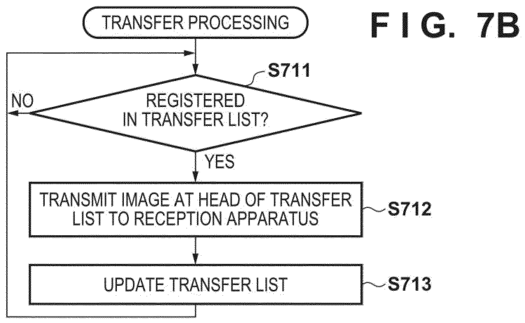

Hereinafter, an operation of image transfer processing according to the present embodiment is described with reference to FIG. 7B. Note that each process in this flowchart is realized by the system control unit 50 loading a program stored in the nonvolatile memory 56 into the system memory 52 and then executing the program. Note that the processing of FIG. 7B is executed by a plurality of digital cameras that are communicatively connected to each other.

In the digital camera 100, the system control unit 50 monitors the transfer list held in the system memory 52, and automatically transfers transfer-target images according to the transfer list.

In step S711, the system control unit 50 determines whether or not transfer information is registered in the transfer list. In a case where it is determined that the transfer information has been registered (Yes), the system control unit 50 advances the processing to step S712, otherwise (No), the system control unit 50 repeats the processing of step S711. Configuration may be taken such that the processing of FIG. 7B is started in accordance with the transfer information that has been registered to the transfer list without repeating the processing of step S711.

In step S712, the system control unit 50 transmits images targeted for transfer to the reception apparatus 300 via the communication unit 54. At this time, the system control unit 50 reads the target image from the recording medium 200 and transmits the target image to the reception apparatus 300 based on the transfer information recorded at the head of the transfer list. When the transmission of the image in step S712 has completed, the system control unit 50 deletes the image transmitted in step S712 from the transfer list (that is, it updates the transfer list) in step S713. In the example illustrated in FIG. 8, the system control unit 50 deletes the information of the image 820 transferred in step S712 from the transfer list in accordance with the transmission of the image 820 in step S712. The information of the image 821 becomes the head of the transfer list due to the information of the image 820 having been deleted.

As described above, in the present disclosure, linked image capturing is performed by a plurality of digital cameras, and captured images are respectively transmitted from the plurality of digital cameras to the reception apparatus 300. In the first embodiment, the digital cameras normally transmit the images in the order in which they were captured, which is described in the transfer list. However, a digital camera can receive an editing instruction (change instruction) for changing the transfer order of images from the user made on the operation unit, and the digital camera changes the transfer order of the images in accordance with the editing instruction. When the transfer order of the images is changed, not only the transfer order in the apparatus itself is changed, but also the transfer order of the images captured by the other digital cameras is changed in the other digital cameras in linkage with the image for which the editing instruction to change the transfer order has been given.

Note that configuration may be taken so as to set whether or not a captured image is to be transmitted and whether or not the image is targeted for priority transfer in linkage with other digital cameras, in a case where there is a digital camera that does not need to transmit some or all of the images that it captured. For example, assume that a plurality of digital cameras are arranged at a sports game, where one camera is arranged to capture images in front of a goal of team A and another is arranged to capture images in front of a goal of team B. Configuration may be taken such that, in a case of a linked image capturing target scene, such as a scene in front of a goal of a soccer game, images captured in front of the goal of the side where the scene is not occurring are not transmitted as link captured images or transfer thereof is not prioritized. In addition, this is not limited to only a specific scene, and configuration may be such that captured images of a certain digital camera are not transmitted or such that transfer thereof is not prioritized in image capturing on a particular day depending on the application. For this, the system control unit 50 holds (or dynamically obtains from an external apparatus), as a setting, whether or not captured images are to be transmitted or whether or not captured images are targeted for priority transfer, for example. Configuration may be taken such that the system control unit 50 does not transmit an image transfer instruction to some of the other digital cameras in a case of a designation that transmission of captured images is not be performed (image transmission is not performed). Also, configuration may be such that the system control unit 50 does not transmit the priority transfer instruction to some of the other digital cameras in accordance with the setting of whether or not images are targeted for priority transfer linked with the other digital cameras. The system control unit 50 can skip step S604 and step S607 in a case where the captured images are not to be transmitted, and can skip step S709 in a case where priority transfer target linkage is not to be performed.

Further, in the above described embodiment, the system control unit 50 transmits a priority transfer instruction to the other digital cameras in accordance with having received an editing instruction in which the user selected a specific image from the transfer list on the screen displayed on the display unit 28. That is, the priority transfer instruction is performed so that an image selected by the user from images that have already been captured is set as the priority transmission target. However, configuration may be taken such that a priority transfer instruction may be performed so that an image captured at a predetermined timing or in a predetermined period is set as a priority transmission target. For example, the system control unit 50 may receive a setting such that the next captured image or subsequent captured images are set as targets for a priority transfer instruction. Configuration may be taken such that, in a case where such a setting is performed, the system control unit 50 transmits to another digital camera a priority transfer instruction targeting the captured image, in accordance with having received an image capturing instruction (an image capturing operation for capturing an image specified in the operation unit) made on the release button. In this way, transfer of images to be captured thereafter, and images to be captured in linkage with those images, to the reception apparatus 300 can be prioritized.

### (Second Embodiment)

Next, a second embodiment is described. In the second embodiment, a configuration in which another digital camera is instructed to perform an operation that has been performed on a specific digital camera will be described. In the present embodiment, for example, when an instruction of a priority transfer target is made by a specific digital camera, transfer of an image captured at the same time as the image set as the priority transfer target is prioritized in another digital camera as well. In the digital camera according to the present embodiment, although some of the capture event processing and some of the transfer event processing is different from those of the first embodiment, other processing and the configuration of the digital camera are the same as or substantially the same as those of the first embodiment. Therefore, the same or substantially the same configurations and processing are denoted by the same reference numerals, description thereof is omitted, and differences are mainly described.

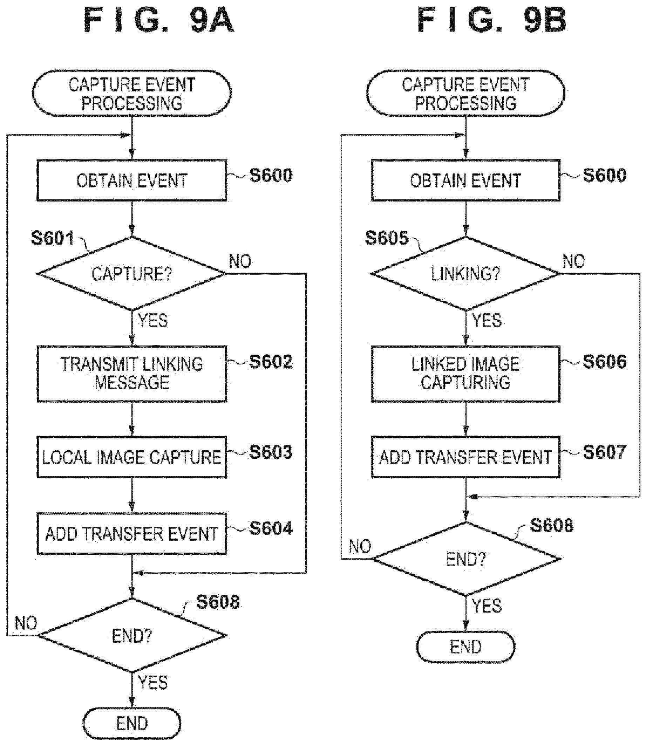

Hereinafter, an operation of capture event processing for linked image capturing according to the second embodiment is described with reference to FIGS. 9A and 9B. Note, a specific digital camera is described as reference numeral 100c and another digital camera is described as reference numeral 100d in order to distinguish between the specific digital camera and the other digital camera in the present embodiment. There may be a plurality of other digital cameras 100d. FIG. 9A illustrates an operation of the specific digital camera 100c that instructs the other digital camera 100d to perform linked image capturing. Meanwhile, FIG. 9B illustrates an operation of the other digital camera 100d which receives an instruction to perform linked image capturing from the specific digital camera 100c.

Note that each process illustrated in FIG. 9A is realized by the system control unit 50 of the specific digital camera 100c loading a program stored in the nonvolatile memory 56 into the system memory 52 and then executing the program. Each operation of step S600 to step S604 and step S608 shown in FIG. 9A are processes similar to the processes described for FIG. 6. Note that each process illustrated in FIG. 9B is realized by the system control unit 50 of the digital camera 100d loading a program stored in the nonvolatile memory 56 into the system memory 52 and then executing the program. Each operation of step S600 and step S605 to step S608 shown in FIG. 9B are processes similar to the processes described with regards to FIG. 6. Note, the processing after step S601 or after step S605 ends up being executed immediately in accordance with a user instruction or a reception of a message since the system control unit 50 of the specific digital camera 100c and the digital camera 100d constantly monitors events.

The specific digital camera 100c that executes the processing illustrated in FIG. 9A does not require determination processing corresponding to step S605 illustrated in FIG. 6. For this reason, in a case where the event is not an event of an image capturing instruction operation in step S601 (No), the system control unit 50 advances the processing to step S608. In the digital camera 100d that executes the processing illustrated in FIG. 9B, the system control unit 50 advances from step S600 to step S605 since the system control unit 50 does not need to perform the determination processing corresponding to step S601 illustrated in FIG. 6. By these processes, capture event processing is executed in each of the specific digital camera 100c and the other digital camera 100d.

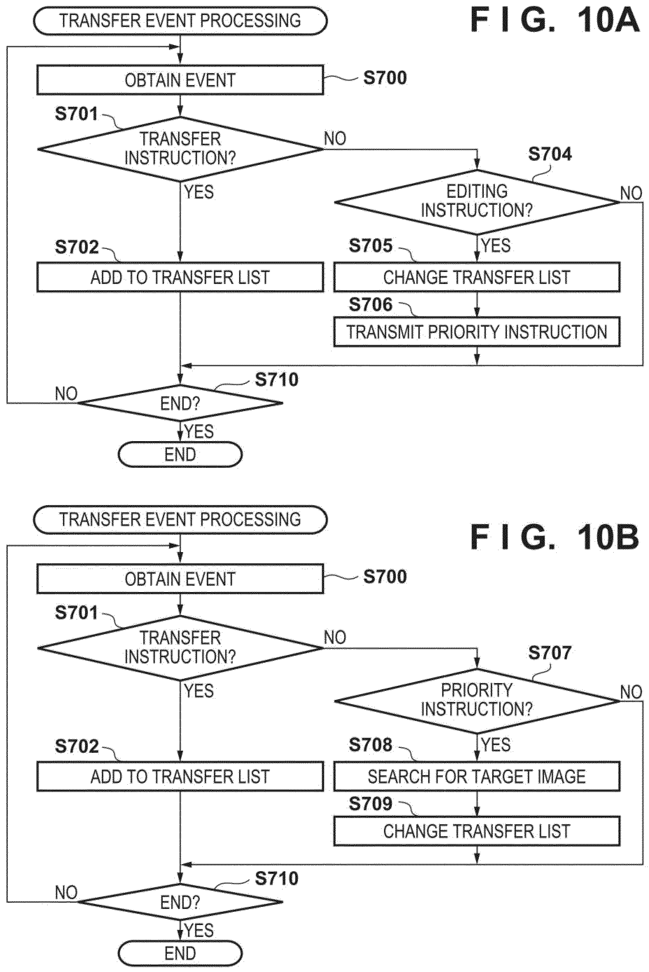

Hereinafter, an operation of transfer event processing according to the second embodiment is described with reference to FIG. 10A and FIG. 10B. FIG. 10A is processing of the specific digital camera 100c which transmits a priority transfer instruction to another digital camera. Also, FIG. 10B is processing of the other digital camera 100d which receives the priority transfer instruction from the specific digital camera 100c. Note that each process illustrated in FIG. 10A is realized by the system control unit 50 of the specific digital camera 100c loading a program stored in the nonvolatile memory 56 into the system memory 52 and executing the program. Also, each process illustrated in FIG. 10B is realized by the system control unit 50 of the digital camera 100d loading a program stored in the nonvolatile memory 56 into the system memory 52 and then executing the program. Note that each operation of step S700 to step S702, step S704 to step S706, step S707 to step S709 and step S710 shown in FIG. 10A and FIG. 10B is a process similar to a respective process described for FIG. 7A. Also, the specific digital camera 100c and the other digital camera 100d each execute the above described image transferring processing in FIG. 7B. The processing of transferring each image is realized by the system control unit 50 of each digital camera loading a program stored in the nonvolatile memory 56 into the system memory 52 and then executing the program.

In the operation shown in FIG. 10A, the determination in step S707 shown in FIG. 7A (the determination as to whether the priority transfer instruction is received as a message) is not performed since the digital camera 100c is the one that transmits the priority transfer instruction. Therefore, in a case where the system control unit 50 of the digital camera 100c determines that the transfer event indicating the editing instruction of the transfer list has not been received in step S704 (No), the processing advances to step S710. On the other hand, in FIG. 10B, the digital camera 100d does not perform the determination in step S704, that is, the determination of whether the event is a transfer event indicating an instruction to edit the transfer list. In a case where the system control unit 50 of the digital camera 100d determines in step S701 that the transfer event is not an event for adding images to the transfer list (No), the processing advances to step S707.

As described above, in the second embodiment, it is possible to perform linked image capturing by a plurality of digital cameras, and transmit each captured image from the plurality of digital cameras to the reception apparatus 300. Each digital camera normally transmits the images in the order in which they were captured, which is described in the transfer list. In this case, in the second embodiment, an editing instruction (change instruction) for changing the transfer order of the images is received in the specific digital camera, and the transfer order of the images is changed in accordance with the editing instruction. When the specific digital camera transmits a priority transfer instruction, the other digital cameras can prioritize transfer of images captured at the same time as images for which an editing instruction to change the transfer order of the images has been given. In this embodiment, the roles of the specific digital camera and the other digital cameras may be distinguished to improve processing efficiency.

### (Third Embodiment)

Next, a description is given for a third embodiment. In the above described embodiment, a case in which a digital camera directly transmits and receives messages designating a priority transfer target with a plurality of digital cameras is described as an example. In the third embodiment, an example is given in which a message indicating a priority transfer target designated in a certain digital camera is transmitted from the digital camera to the reception apparatus 300, and the reception apparatus 300 makes an instruction of the priority transfer target to another digital camera. Note, in the digital camera according to the present embodiment, although some of the transfer event processing is different from that of the first embodiment, other processing and the configuration of the digital camera are the same as or substantially the same as those of the first embodiment. Therefore, the same or substantially the same configurations and processing are denoted by the same reference numerals, description thereof is omitted, and differences are mainly described.

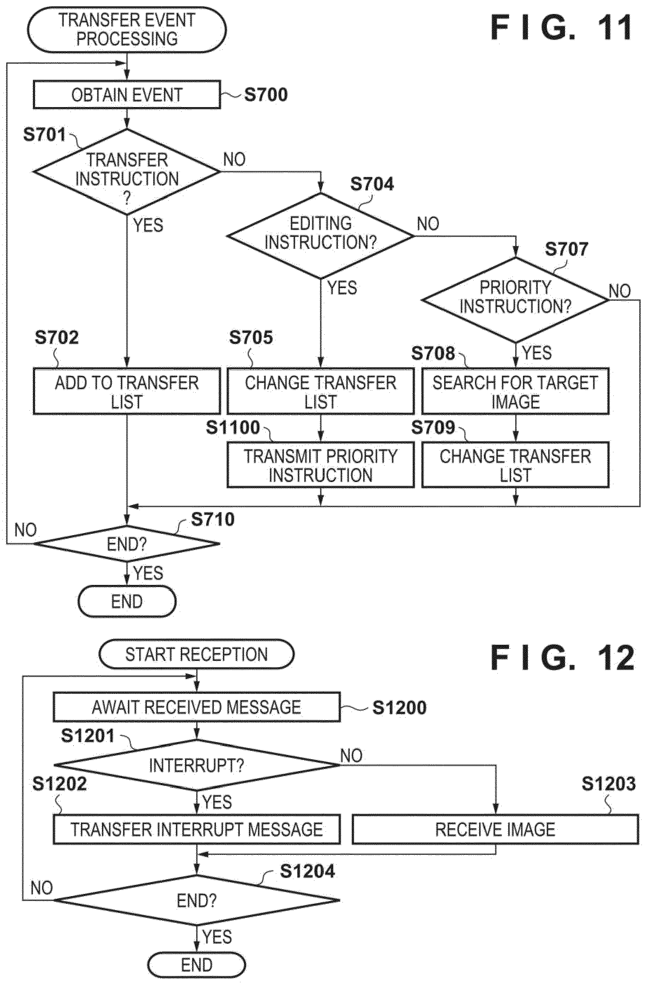

FIG. 11 is a flowchart illustrating operation of image transfer event processing according to a third embodiment. Note that similar to the case of FIG. 7A, each process illustrated in FIG. 11 is realized by the system control unit 50 of the digital camera 100 loading a program stored in the nonvolatile memory 56 into the system memory 52 and then executing the program. Step S700 to step S702, step S704 to step S705, and step S707 to step S709 described in FIG. 11 are processes similar to respective processes illustrated in FIG. 7A. In a case where the processing of step S700, step S701, step S704, and step S705 is executed similarly to in the first embodiment, the system control unit 50 advances the processing to step S1100. Through these processes, the system control unit 50 receives an editing instruction for changing the transfer order of the image from the user, and changes the transfer order of the image in accordance with the editing instruction.

In step S1100, the system control unit 50 transmits a priority transfer instruction as a message to the reception apparatus 300 (instead of transmitting the priority transfer instruction to the other digital camera 100 as a message, as in step S705 described in the first embodiment). In step S1100, content of the message (that is, an interrupt message) to be transmitted to the reception apparatus 300 is similar to the content of the message in step S706.

Next, reception processing of the reception apparatus 300 according to the third embodiment is described with reference to FIG. 12. Note that this reception processing is realized by the processor of the reception apparatus 300 loading a program stored in the storage medium into the memory and executing the program.

In step S1200, the reception apparatus 300 waits for a message for instructing a priority transfer target transmitted from the digital camera 100. In step S1201, the reception apparatus 300 determines whether the message received in step S1200 is a message (interrupt message) for instructing the priority transfer target. In a case where the received message is a message instructing a priority transfer target (Yes), the reception apparatus 300 advances the processing to step S1203, and advances the processing to step S1202 in a case where the received message is not (No).

In step S1202, the reception apparatus 300 transmits a priority transfer instruction as a message (interrupt message) to a digital camera (different from the digital camera that transmitted the received message). The digital camera that receives the message from the reception apparatus 300 is treated as a digital camera 100e. There may be a plurality of other digital cameras 100e. The message of the priority transfer instruction is transmitted to the digital camera 100e via the communication path 301. At this time, the reception apparatus 300 specifies the transmission destination of the message in step S1202 from the IP address 802 of the digital camera that indicates the destination of the message for instructing the priority transfer target, included in the message received in step S1200.

In step S1203, the reception apparatus 300 receives each image (e.g., in a case where messages in which images are transferred are received from the digital camera that transmitted the interrupt message and the digital camera 100e respectively). In step S1204, the reception apparatus 300 determines whether or not to terminate the reception processing. The reception apparatus 300 terminates the operation of the reception processing in a case where the reception processing is to be terminated (Yes), and otherwise returns the processing to step S1200 (No).

As described above, in the third embodiment, it is possible to perform linked image capturing by a plurality of digital cameras, and transmit each captured image from the plurality of digital cameras to the reception apparatus 300. Each digital camera normally transmits the images in the order at which they were captured, which is described in the transfer list. In the third embodiment, an editing instruction (change instruction) for changing the transfer order of the images is received in a certain digital camera, and the transfer order of the images is changed in accordance with the editing instruction. At this time, the digital camera transmits a priority transfer instruction to another digital camera via the reception apparatus 300, and the other digital camera prioritizes transfer of an image captured at the same time as the image for which the editing instruction for changing the transfer order of the image was given.

As described in the above embodiments, in the digital camera, control is taken to prioritize transmission of a first image to the reception apparatus in accordance with having received an instruction to change the transmission order of the first image by the operation unit during transmission of a plurality of images in a predetermined order. In addition, the digital camera transmits the priority transfer instruction such that transmission of an image associated with the first image to the reception apparatus is prioritized by another digital camera capable of communicating via the communication unit. By doing so, it is possible to prioritize the transfer of an image captured in linkage with an image set as a priority transfer target by another image capturing apparatus.

Note that configuration may be taken such that the various types of control performed by the system control unit 50 described above are performed by one piece of hardware, or are performed by a plurality of pieces of hardware (for example, a plurality of processors and circuits) sharing processing, thereby controlling the entire apparatus.

Also, a case where the present disclosure is applied to a digital camera has been described as an example in the above described embodiments, but some embodiments are not limited to the above-described example. The present disclosure can be applied to other electronic devices as long as it is possible to perform linked-image capturing and prioritize transfer of a captured image. That is, the above described embodiments are also applicable to a personal computer, a mobile phone terminal, a portable image viewer, a game machine, and the like.

### Other Embodiments

Some embodiment(s) of the present disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has described exemplary embodiments, it is to be understood that some embodiments are not limited to the disclosed exemplary embodiments. The scope of the present invention is defined by the following claims.

## Claims

1. An image capturing apparatus (100), comprising:
operation means (70) for receiving an operation by a user;
communication means (54) for communicating with a communication apparatus (300) and another image capturing apparatus; and
control means (50) for performing control to transmit a plurality of captured images in a predetermined order to the communication apparatus via the communication means, **characterized in that**
the communication means (54) is configured to establish a connection for linked image capturing between the image capturing apparatus and the other image capturing apparatus, and
when linked image capturing is performed, during transmission of the plurality of the images in the predetermined order, in accordance with an instruction to change a transmission order of a first image having been received by the operation means, the control means is configured to perform control to prioritize transmission of the first image to the communication apparatus and is further configured to transmit a priority transfer instruction to the other image capturing apparatus such that transmission of an image linked with the first image to the communication apparatus is prioritized by another image capturing apparatus capable of communicating via the communication means.

2. The image capturing apparatus according to claim 1, wherein the image linked with the first image is an image captured in the other image capturing apparatus with which a connection for linked image capturing has been established.

3. The image capturing apparatus according to claim 2, wherein the control means, in accordance with an instruction to capture an image having been received from a user by the operation means, performs control so as to capture an image and performs control such that an image is captured by the other image capturing apparatus with which a connection for linked image capturing has been established.

4. The image capturing apparatus according to claim 3, wherein the control means, in accordance with the image capturing instruction having been received, captures an image in the image capturing apparatus and makes the captured image a target of transmission to the communication apparatus.

5. The image capturing apparatus according to claim 3 or 4, wherein the control means, in accordance with the image capturing instruction having been received, performs control to capture an image in the image capturing apparatus and transmit an image capturing instruction to the other image capturing apparatus.

6. The image capturing apparatus according to any one of claims 1 to 5, wherein the control means, in accordance with the instruction to change the transmission order of the first image having been received by the operation means, transmits, to the other image capturing apparatus, a priority instruction for prioritizing transmission of the image linked with the first image to the communication apparatus.

7. The image capturing apparatus according to claim 6, wherein the control means, in a case where the priority instruction is transmitted to the other image capturing apparatus, performs control so as to not transmit the priority instruction to some of the other image capturing apparatuses.

8. The image capturing apparatus according to any one of claims 1 to 7, wherein the control means, in accordance with a transfer list in which an order for transmitting captured images is determined, performs control to transmit the plurality of images to the communication apparatus in the predetermined order, and
the control means, in accordance with an instruction to change the transmission order of the first image having been received by the operation means, changes the transfer list such that transmission of the first image to the communication apparatus is prioritized.

9. The image capturing apparatus according to claim 8, wherein the transfer list includes at least one of image identification information, information indicating that the image was captured in linkage with another image capturing apparatus with which a connection for linked image capturing has been established, identification information of an image capturing apparatus that performed image capture in linkage with the image, a release count when the image was captured, and a time when the image was captured.

10. A method of controlling an image capturing apparatus (100) comprising an operation device (70) configured to receive an operation by a user and a communication device (54) configured to communicate with a communication apparatus (300) and another image capturing apparatus, the method comprising:
controlling so as to transmit a plurality of captured images in a predetermined order to the communication apparatus via the communication device, **characterized by**
establishing a connection for linked image capturing between the image capturing apparatus and the other image capturing apparatus, wherein
in the controlling, when linked image capturing is performed, during transmission of the plurality of the images in the predetermined order, in accordance with an instruction to change a transmission order of a first image having been received by the operation device, control is performed so as to prioritize the first image to be transmitted to the communication apparatus and a priority transfer instruction is transmitted to the other image capturing apparatus such that transmission of an image linked with the first image to the communication apparatus is prioritized by another image capturing apparatus capable of communicating via the communication device.

11. A computer program including instructions for performing a method of controlling an image capturing apparatus (100), comprising an operation device (70) configured to receive an operation by a user and a communication device (54) configured to communicate with a communication apparatus (300) and another image capturing apparatus, the method comprising:
controlling so as to transmit a plurality of captured images in a predetermined order to the communication apparatus via the communication device, **characterized by**
establishing a connection for linked image capturing between the image capturing apparatus and the other image capturing apparatus, wherein
in the controlling, when linked image capturing is performed, during transmission of the plurality of the images in the predetermined order, in accordance with an instruction to change a transmission order of a first image having been received by the operation device, control is performed so as to prioritize the first image to be transmitted to the communication apparatus and a priority transfer instruction is transmitted to the other image capturing apparatus such that transmission of an image linked with the first image to the communication apparatus is prioritized by another image capturing apparatus capable of communicating via the communication device.

## Patentansprüche

1. Bildaufnahmevorrichtung (100), mit:
einer Operationseinrichtung (70) zum Empfangen einer Operation durch einen Benutzer;
einer Kommunikationseinrichtung (54) zum Kommunizieren mit einer Kommunikationsvorrichtung (300) und einer anderen Bildaufnahmevorrichtung; und
einer Steuerungseinrichtung (50) zum Durchführen einer Steuerung, um eine Vielzahl von aufgenommenen Bildern in einer vorbestimmten Reihenfolge über die Kommunikationseinrichtung an die Kommunikationsvorrichtung zu übertragen, **dadurch gekennzeichnet, dass**
die Kommunikationseinrichtung (54) dazu konfiguriert ist, eine Verbindung für eine verknüpfte Bildaufnahme zwischen der Bildaufnahmevorrichtung und der anderen Bildaufnahmevorrichtung herzustellen, und
wenn eine verknüpfte Bildaufnahme durchgeführt wird, während einer Übertragung der Vielzahl der Bilder in der vorbestimmten Reihenfolge, gemäß einer Anweisung zum Ändern einer Übertragungsreihenfolge eines ersten Bildes, die von der Operationseinrichtung empfangen wurde, die Steuerungseinrichtung dazu konfiguriert ist, eine Steuerung durchzuführen, um eine Übertragung des ersten Bildes an die Kommunikationsvorrichtung zu priorisieren, und weiterhin dazu konfiguriert ist, eine Prioritätsübertragungsanweisung an die andere Bildaufnahmevorrichtung zu übertragen, so dass eine Übertragung eines mit dem ersten Bild verknüpften Bildes an die Kommunikationsvorrichtung durch eine andere Bildaufnahmevorrichtung, die in der Lage ist, über die Kommunikationseinrichtung zu kommunizieren, priorisiert wird.

2. Bildaufnahmevorrichtung gemäß Anspruch 1, wobei das mit dem ersten Bild verknüpfte Bild ein Bild ist, das in der anderen Bildaufnahmevorrichtung aufgenommen wurde, mit der eine Verbindung für die verknüpfte Bildaufnahme hergestellt worden ist.

3. Bildaufnahmevorrichtung gemäß Anspruch 2, wobei die Steuerungseinrichtung gemäß einer Anweisung zum Aufnehmen eines Bildes, die von einem Benutzer durch die Operationseinrichtung empfangen wurde, eine Steuerung durchführt, um ein Bild aufzunehmen, und eine Steuerung durchführt, so dass ein Bild durch die andere Bildaufnahmevorrichtung, mit der eine Verbindung zur verknüpften Bildaufnahme hergestellt wurde, aufgenommen wird.

4. Bildaufnahmevorrichtung gemäß Anspruch 3, wobei die Steuerungseinrichtung gemäß der Bildaufnahmeanweisung, die empfangenen wurde, ein Bild in der Bildaufnahmevorrichtung aufnimmt und das aufgenommene Bild zu einem Ziel der Übertragung an die Kommunikationsvorrichtung macht.

5. Bildaufnahmevorrichtung gemäß Anspruch 3 oder 4, wobei die Steuerungseinrichtung gemäß der Bildaufnahmeanweisung, die empfangenen wurde, eine Steuerung durchführt, um ein Bild in der Bildaufnahmevorrichtung aufzunehmen und eine Bildaufnahmeanweisung an die andere Bildaufnahmevorrichtung zu übertragen.

6. Bildaufnahmevorrichtung gemäß einem der Ansprüche 1 bis 5, wobei die Steuerungseinrichtung gemäß der Anweisung zum Ändern der Übertragungsreihenfolge des ersten Bildes, die von der Operationseinrichtung empfangen wurde, an die andere Bildaufnahmevorrichtung eine Prioritätsanweisung zum Priorisieren einer Übertragung des mit dem ersten Bild verknüpften Bildes an die Kommunikationsvorrichtung überträgt.

7. Bildaufnahmevorrichtung gemäß Anspruch 6, wobei die Steuerungseinrichtung in einem Fall, in die Prioritätsanweisung an die andere Bildaufnahmevorrichtung übertragen wird, eine Steuerung durchführt, um die Prioritätsanweisung an einige der anderen Bildaufnahmevorrichtungen nicht zu übertragen.

8. Bildaufnahmevorrichtung gemäß einem der Ansprüche 1 bis 7, wobei die Steuerungseinrichtung gemäß einer Übertragungsliste, in der eine Reihenfolge zum Übertragen der aufgenommenen Bilder bestimmt ist, eine Steuerung durchführt, um die Vielzahl der Bilder in der vorbestimmten Reihenfolge an die Kommunikationsvorrichtung zu übertragen, und
die Steuerungseinrichtung gemäß einer Anweisung zum Ändern der Übertragungsreihenfolge des ersten Bildes, die von der Operationseinrichtung empfangen wurde, die Übertragungsliste so ändert, dass die Übertragung des ersten Bildes an die Kommunikationsvorrichtung priorisiert wird.

9. Bildaufnahmevorrichtung gemäß Anspruch 8, wobei die Übertragungsliste mindestens eine der folgenden umfasst: Bildidentifizierungsinformationen, Informationen, die angeben, dass das Bild in Verknüpfung mit einer anderen Bildaufnahmevorrichtung aufgenommen wurde, mit der eine Verbindung für eine verknüpfte Bildaufnahme hergestellt wurde, Identifizierungsinformationen einer Bildaufnahmevorrichtung, die eine Bildaufnahme in Verknüpfung mit dem Bild durchgeführt hat, einen Auslösezähler, wann das Bild aufgenommen wurde, und eine Zeit, wann das Bild aufgenommen wurde.

10. Verfahren zum Steuern einer Bildaufnahmevorrichtung (100), die eine Operationseinrichtung (70), die dazu konfiguriert ist, eine Operation durch einen Benutzer zu empfangen, und eine Kommunikationseinrichtung (54), die dazu konfiguriert ist, mit einer Kommunikationsvorrichtung (300) und einer anderen Bildaufnahmevorrichtung zu kommunizieren, aufweist, wobei das Verfahren aufweist:
Steuern, um eine Vielzahl von aufgenommenen Bildern in einer vorbestimmten Reihenfolge über die Kommunikationseinrichtung an die Kommunikationsvorrichtung zu übertragen, **gekennzeichnet durch**
Herstellen einer Verbindung für eine verknüpfte Bildaufnahme zwischen der Bildaufnahmevorrichtung und der anderen Bildaufnahmevorrichtung, wobei
in der Steuerung, wenn eine verknüpfte Bildaufnahme durchgeführt wird, während einer Übertragung der Vielzahl der Bilder in der vorbestimmten Reihenfolge, gemäß einer Anweisung zum Ändern einer Übertragungsreihenfolge eines ersten Bildes, die von der Operationseinrichtung empfangen wurde, eine Steuerung durchgeführt wird, um das erste Bild, das an die Kommunikationsvorrichtung zu übertragen ist, zu priorisieren, und eine Prioritätsübertragungsanweisung an die andere Bildaufnahmevorrichtung übertragen wird, so dass eine Übertragung eines mit dem ersten Bild verknüpften Bildes an die Kommunikationsvorrichtung durch eine andere Bildaufnahmevorrichtung, die in der Lage ist, über die Kommunikationseinrichtung zu kommunizieren, priorisiert wird.

11. Computerprogramm, das Anweisungen zur Durchführung eines Verfahrens zum Steuern einer Bildaufnahmevorrichtung (100) aufweist, die eine Operationseinrichtung (70), die dazu konfiguriert ist, eine Operation durch einen Benutzer zu empfangen, und eine Kommunikationseinrichtung (54), die dazu konfiguriert ist, mit einer Kommunikationsvorrichtung (300) und einer anderen Bildaufnahmevorrichtung zu kommunizieren, aufweist, wobei das Verfahren umfasst:
Steuern, um eine Vielzahl von aufgenommenen Bildern in einer vorbestimmten Reihenfolge über die Kommunikationseinrichtung an die Kommunikationsvorrichtung zu übertragen, **gekennzeichnet durch**
Herstellen einer Verbindung für eine verknüpfte Bildaufnahme zwischen der Bildaufnahmevorrichtung und der anderen Bildaufnahmevorrichtung, wobei
in der Steuerung, wenn eine verknüpfte Bildaufnahme durchgeführt wird, während einer Übertragung der Vielzahl der Bilder in der vorbestimmten Reihenfolge, gemäß einer Anweisung zum Ändern einer Übertragungsreihenfolge eines ersten Bildes, die von der Operationseinrichtung empfangen wurde, eine Steuerung durchgeführt wird, um das erste Bild, das an die Kommunikationsvorrichtung zu übertragen ist, zu priorisieren, und eine Prioritätsübertragungsanweisung an die andere Bildaufnahmevorrichtung übertragen wird, so dass eine Übertragung eines mit dem ersten Bild verknüpften Bildes an die Kommunikationsvorrichtung durch eine andere Bildaufnahmevorrichtung, die in der Lage ist, über die Kommunikationseinrichtung zu kommunizieren, priorisiert wird.

## Revendications

1. Appareil de capture d'image (100), comprenant :
des moyens d'opération (70) pour recevoir une opération par un utilisateur ;
des moyens de communication (54) pour communiquer avec un appareil de communication (300) et un autre appareil de capture d'image ; et
des moyens de commande (50) pour réaliser une commande de transmission d'une pluralité d'images capturées dans un ordre prédéterminé à l'appareil de communication via les moyens de communication, **caractérisé en ce que**
les moyens de communication (54) sont configurés pour établir une connexion pour une capture d'image liée entre l'appareil de capture d'image et l'autre appareil de capture d'image, et
lorsque la capture d'image liée est réalisée, lors de la transmission de la pluralité des images dans l'ordre prédéterminé, conformément à une instruction de modification d'un ordre de transmission d'une première image ayant été reçue par les moyens d'opération, les moyens de commande sont configurés pour réaliser une commande pour prioriser la transmission de la première image à l'appareil de communication et sont en outre configurés pour transmettre une instruction de transfert de priorité à l'autre appareil de capture d'image de sorte que la transmission d'une image liée à la première image à l'appareil de communication soit priorisée par un autre appareil de capture d'image capable de communiquer via les moyens de communication.

2. Appareil de capture d'image selon la revendication 1, dans lequel l'image liée à la première image est une image capturée dans l'autre appareil de capture d'image avec lequel une connexion pour la capture d'image liée a été établie.

3. Appareil de capture d'image selon la revendication 2, dans lequel les moyens de commande, conformément à une instruction de capture d'une image ayant été reçue d'un utilisateur par les moyens d'opération, réalisent une commande de sorte à capturer une image et effectue une commande de sorte qu'une image soit capturée par l'autre appareil de capture d'image avec lequel une connexion pour la capture d'image liée a été établie.

4. Appareil de capture d'image selon la revendication 3, dans lequel les moyens de commande, conformément à l'instruction de capture d'image ayant été reçue, capturent une image dans l'appareil de capture d'image et font de l'image capturée une cible de transmission à l'appareil de communication.

5. Appareil de capture d'image selon la revendication 3 ou 4, dans lequel les moyens de commande, conformément à l'instruction de capture d'image ayant été reçue, réalisent une commande pour capturer une image dans l'appareil de capture d'image et transmettre une instruction de capture d'image à l'autre appareil de capture d'image.

6. Appareil de capture d'image selon l'une quelconque des revendications 1 à 5, dans lequel les moyens de commande, conformément à l'instruction de modifier l'ordre de transmission de la première image ayant été reçue par les moyens d'opération, transmettent, à l'autre appareil de capture d'image, une instruction de priorité de transmission de l'image liée à la première image à l'appareil de communication.

7. Appareil de capture d'image selon la revendication 6, dans lequel les moyens de commande, dans un cas où l'instruction de priorité est transmise à l'autre appareil de capture d'image, réalisent une commande de manière à ne pas transmettre l'instruction de priorité à certains des autres appareils de capture d'image.

8. Appareil de capture d'image selon l'une quelconque des revendications 1 à 7, dans lequel les moyens de commande, conformément à une liste de transfert dans laquelle un ordre de transmission d'images capturées est déterminé, réalisent une commande pour transmettre la pluralité d'images à l'appareil de communication dans l'ordre prédéterminé, et
les moyens de commande, conformément à une instruction de modification de l'ordre de transmission de la première image ayant été reçue par les moyens d'opération, modifient la liste de transfert de sorte que la transmission de la première image à l'appareil de communication soit priorisée.

9. Appareil de capture d'image selon la revendication 8, dans lequel la liste de transfert inclut au moins l'une parmi des informations d'identification d'image, des informations indiquant que l'image a été capturée en lien avec un autre appareil de capture d'image avec lequel une connexion pour la capture d'image liée a été établie, des informations d'identification d'un appareil de capture d'image qui a réalisé une capture d'image en lien avec l'image, un décompte de libération lorsque l'image a été capturée et un moment où l'image a été capturée.

10. Procédé de commande d'un appareil de capture d'image (100) comprenant un dispositif d'opération (70) configuré pour recevoir une opération par un utilisateur et un dispositif de communication (54) configuré pour communiquer avec un appareil de communication (300) et un autre appareil de capture d'image, le procédé comprenant :
la commande de manière à transmettre une pluralité d'images capturées dans un ordre prédéterminé à l'appareil de communication via le dispositif de communication, **caractérisé par**
l'établissement d'une connexion pour la capture d'image liée entre l'appareil de capture d'image et l'autre appareil de capture d'image, dans lequel
dans la commande, lorsque la capture d'image liée est réalisée, pendant la transmission de la pluralité des images dans l'ordre prédéterminé, conformément à une instruction de modification d'un ordre de transmission d'une première image ayant été reçue par le dispositif d'exploitation, la commande est réalisée de manière à prioriser la première image à transmettre à l'appareil de communication et une instruction de transfert de priorité est transmise à l'autre appareil de capture d'image de sorte que la transmission d'une image liée à la première image à l'appareil de communication soit priorisée par un autre appareil de capture d'image capable de communiquer via le dispositif de communication.

11. Programme informatique incluant des instructions pour réaliser un procédé de commande d'un appareil de capture d'image (100), comprenant un dispositif d'opération (70) configuré pour recevoir une opération par un utilisateur et un dispositif de communication (54) configuré pour communiquer avec un appareil de communication (300) et un autre appareil de capture d'image, le procédé comprenant :
la commande de manière à transmettre une pluralité d'images capturées dans un ordre prédéterminé à l'appareil de communication via le dispositif de communication, **caractérisé par**
l'établissement d'une connexion pour la capture d'image liée entre l'appareil de capture d'image et l'autre appareil de capture d'image, dans lequel
dans la commande, lorsque la capture d'image liée est réalisée, pendant la transmission de la pluralité des images dans l'ordre prédéterminé, conformément à une instruction de modification d'un ordre de transmission d'une première image ayant été reçue par le dispositif d'exploitation, la commande est réalisée de manière à prioriser la première image à transmettre à l'appareil de communication et une instruction de transfert de priorité est transmise à l'autre appareil de capture d'image de sorte que la transmission d'une image liée à la première image à l'appareil de communication soit priorisée par un autre appareil de capture d'image capable de communiquer via le dispositif de communication.
